# EUROPÄISCHE PATENTSCHRIFT

(11) **EP 0 602 234 B1**
(45) Veröffentlichungstag und Bekanntmachung des Hinweises auf die Patenterteilung: **12.03.1997**
(21) Anmeldenummer: 93915853.1
(22) Anmeldetag: 08.07.1993
(51) Int. Cl.: B01D 53/02, B01D 53/34, B01D 53/72, F23G 7/06

(54) **VERFAHREN UND VORRICHTUNG ZUR THERMISCHEN BEHANDLUNG VON GAS, INSBESONDERE THERMISCHEN UND/ODER KATALYTISCHEN NACHVERBRENNUNG VON ABGAS**
GAS THERMAL TREATMENT PROCESS AND DEVICE, IN PARTICULAR THERMAL AND/OR CATALYTIC AFTERBURNING OF WASTE GAS
PROCEDE ET DISPOSITIF DE TRAITEMENT THERMIQUE DE GAZ, NOTAMMENT DE POST-COMBUSTION THERMIQUE ET/OU CATALYTIQUE DE GAZ EVACUES

(30) Priorität: 08.07.1992 DE 4222469
(43) Veröffentlichungstag der Anmeldung: 22.06.1994
(73) Patentinhaber: Gossler Thermal Ceramics GmbH, 21465 Reinbek (DE)
(72) Erfinder: KLINGE, Bernd, D-04155 Leipzig (DE); BIRNKRAUT, Ingo, D-25469 Halstenbek (DE); WARMBIER, Bernd, D-27386 Hemslingen (DE); LAUTENSCHLÄGER, Werner, D-88299 Leutkirch (DE)
(74) Vertreter: Schmidt-Evers, Jürgen, Dipl.-Ing.
(86) Internationale Anmeldenummer: EP9301789
(87) Internationale Veröffentlichungsnummer: WO9401202

(56) Entgegenhaltungen:
- EP-A- 0 185 931
- EP-A- 0 454 937

## Beschreibung

Die möglichst umweltfreundliche Beseitigung von bei technischen Prozessen anfallenden gasförmigen organischen Luftschadstoffen wird konventionell durch thermische Nachverbrennung realisiert. Zur hinreichenden Umsetzung der organischen Verbindungen wird allgemein eine Stützfeuerung benötigt und eingesetzt.

Bei der thermischen Nachverbrennung werden angepaßt an den Kohlenwasserstoffgehalt des Abgases zusätzlich fossile Brennstoffe verbrannt, um den notwendigen thermischen Umsetzungsgrad zu gewährleisten.

Katalytische Verfahren benötigen stoff- und konzentrationsabhängig mindestens in der Startphase Zusatzenergie, die allgemein durch eine Verbrennungseinrichtung realisiert wird. Mechanische und thermische Stabilität sowie die Desaktivierungsrate der Katalysatoren bestimmen dabei wesentlich die Wirtschaftlichkeit für den Betreiber und begrenzen die Einsetzbarkeit.

Ein Verfahren und eine Vorrichtung der in den Oberbegriffen der Ansprüche 1 und 7 beschriebenen Arten ist in der EP-A-0 185 931 beschrieben. Bei diesem bekannten Verfahren und dieser bekannten Vorrichtung wird das zu behandelnde Gas durch eine perforierte Platte aus mikrowellenabsorbierendem Material geleitet, auf der eine Granulatschicht aus ebenfalls mikrowellenabsorbierendem Material aufliegt. Im Betrieb der Vorrichtung wird das zu behandelnde Gas von unten nach oben durch die perforierte Platte und die Granulatschicht geleitet, wobei das Gas durch das Vorbeiströmen an den Oberflächen der sich aufgrund der Mikrowellenbeaufschlagung erhitzenden perforierten Platte und Granulatschicht erhitzt wird, s. insbes Fig. 5 und 6, und S. 4, Z. 40 bis S. 5, Mitte.

Mit einem solchen Verfahren und einer solchen Vorrichtung läßt sich eine Mikrowellen-Erhitzung erreichen, die eine Stützfeuerung ersetzt und nicht nur einfacher geregelt und an die erforderlichen Bewegungen angepaßt werden kann, sondern auch wirksamer ist, da bei einer Mikrowellen-Erhitzung die vorhandenen Kanalflächen der perforierten Platte, durch die das zu behandelnde Gas geführt wird, an der Gasbehandlung, hier an der Erhitzung des Gases, teilnimmt.

Bei diesem bekannten Verfahren und dieser bekannten Vorrichtung wird das zu behandelnde Gas unmittelbar in die Heizzone geleitet. Dabei besteht die Gefahr von Rückzündungen, die die Behandlung beeinträchtigen und die Vorrichtung beschädigen können.

Der Erfindung liegt die Aufgabe zugrunde, ein Verfahren und eine Vorrichtung der in den Oberbegriffen der Ansprüche 1 bzw. 7 angegebenen Arten so weiterzubilden, daß Rückzündungen vermieden werden.

Diese Aufgabe wird durch die Merkmale der Ansprüche 1 oder 7 gelöst.

Beim erfindungsgemäßen Verfahren wird das zu behandelnde Gas zuerst durch das gasdurchlässige, mikrowellendurchlässige Material oder Körper und darin durch den Körper aus mikrowellenabsorbierendem Material geführt, in dessen Bereich sich die Reaktionszone befindet. Hierdurch werden Rückzündungen verhindert (Ex-Schutz), was insbesondere für explosive Gase von Bedeutung ist. Außerdem wird eine Durchmischung des zu behandelnden Gases bzw. Gasgemisches oder Abgases erreicht.

Dabei ist bei der Erfindung ohne zusätzliche Produktion von aus einer Stützfeuerung resultierenden sekundären Luftschadstoffen (wie Kohlendioxid und Stickoxide) eine oxidative Umsetzung der anteiligen Schadstoffe gewährleistet. Dabei wird eine sichere Behandlung des Gases, insbesondere die Umsetzung problematischer Kohlenwasserstoffsysteme, erreicht, was insbesondere für thermische Nachverbrennungseinrichtungen und -verfahren von Bedeutung ist. Außerdem lassen sich mit der Erfindung durch Nutzung spezieller quasi katalytischer Zusatzeffekte, insbesondere bei Abgaskomponenten mit polaren molekularen Eigenschaften günstige Wirkungen erzielen.

Ferner ermöglichen die erfindungsgemäßen Merkmale eine sichere Prozeßgestaltung mit einer einfachen Steuerung oder Regelung unter Berücksichtigung vorhandener Parameter wie Temperatur und Druck im Bereich der Vorrichtung.

Die vorgenannten Vorteile werden auch durch die erfindungsgemäße Vorrichtung nach Anspruch 7 erreicht, die sich durch eine einfache Bauweise bei einfacher und sicherer Funktion auszeichnet. Es wird auch eine kleine und kompakte Bauweise erreicht, weil der Reaktor und der Brenner eine Einheit bilden. Dabei ist es von Vorteil, die mit dem Gas in Kontakt stehende Oberfläche des sekundären Körpers so groß wie möglich zu gestalten. Hierzu eignet sich vorzugsweise ein faserförmiges oder poröses Material, durch das hindurch das Gas geleitet wird. Das Material ist vollständig oder wenigstens teilweise Mikrowellenabsorptionsmaterial, z.B. SiC oder C, das sich für oxidative Beanspruchung eignet und entsprechend hergestellt ist. Bei einer Beaufschlagung des so gebildeten Reaktors oder Brenners wird das Material durch die Mikrowellen so angeregt, daß der Gasstrom auf seinem Weg durch das Material eine gleichmäßige indirekte Aufheizung erfährt und insbesondere im Fall der Nachverbrennung von Abgas unter Ausnutzung der entsprechend Kohlenwasserstoffanteil enthaltenen Verbrennungsenthalphie sowie gegebenenfalls zusätzlich unter Ausnutzung des Eigenanregungseffektes von Abgasmolekülen durch die direkte Mikrowellenwirkung gleichmäßig oxidativ umgesetzt wird.

Die Steuerung des Behandlungsprozesses kann hinsichtlich der Aufheizung und/oder der Gasmenge und/oder -zusammensetzung unter Berücksichtigung von Prozeßparametern wie Temperatur und Druck in, vor und/oder hinter dem Körper erfolgen. Dabei ist es in vorteilhafter Weise möglich, die Mikrowellenenergie mit steigender Temperatur zu verringern und mit sich verringender Temperatur zu steigern, so daß ein bestimmbarer Temperatur-Istwert einregelbar ist oder ein bestimmter Temperaturverlauf erreicht wird.

Entsprechendes gilt auch hinsichtlich des vorhandenen Druckes oder vorhandener Drücke.

Es ist vorteilhaft, den Behandlungsprozeß mit schadstofffreier Luft anzufahren. Steht ein bestimmter Druck am Ausgang der Vorrichtung an, der mittels eines geeigneten Sensors leicht ermittelt werden kann, wird der Mikrowellengenerator zugeschaltet, so daß der Reaktor oder Brenner in Funktion treten. Nach Erreichen der Umsetzungstemperatur, die mittels eines geeigneten Sensors ebenfalls problemlos ermittelt werden kann, wird die Zufuhr der schadstofffreien Luft verringert, und es erfolgt die Zufuhr des zu behandelnden Abgases.

In den Unteransprüchen sind Merkmale enthalten, die zur Problemlösung beitragen, die Funktionssicherheit verbessern, eine einfache Bauweise und eine einfache Steuerung bzw. Regelung ermöglichen, eine lange Lebensdauer gewährleisten und außerdem eine Ausnutzung der im behandelten Abgas vorhandenen Wärme ermöglichen.

Nachfolgend werden die Erfindung und weitere durch sie erzielbare Vorteile anhand von bevorzugten Ausführungsbeispielen und einer Zeichnung näher erläutert. Es zeigt
- Fig. 1: eine erfindungsgemäße Vorrichtung im axialen Längsschnitt;
- Fig. 2: die Vorrichtung in der Stirnansicht von links bei abgewandelter Ausgestaltung;
- Fig. 3: eine weiter abgewandelte, erfindungsgemäße Vorrichtung im axialen Längsschnitt.

Die Hauptteile der Vorrichtung 1 sind ein Reaktorgehäuse 2, ein Mikrowellengenerator 3, eine Zuführungsleitung 4 für schadstofffreie Luft und/oder Abgas, eine Gas-Abführungsleitung 5, zwei Temperatursensoren 6,7, ein Gasdrucksensor 8, ein Sensor 9 zur Ermittlung der Abgaskonzentration, ein sog. Stoffsensor, und eine nicht dargestellte Steuer- und Regeleinrichtung, die durch Signalleitungen mit dem Mikrowellengenerator 3 den Sensoren 6 bis 9 und einem beispielsweise elektromagnetischen Steuer- oder Umschaltventil 11 (3/2-Wegeventil) verbunden ist, um von diesen Teilen Steuerungssignale mitgeteilt zu bekommen bzw. Steuersignale an den Mikrowellengenerator 3 oder das Umschaltventil 11 weiterzuleiten.

Das Gehäuse 2 besteht aus einem dünnen, vorzugsweise zylindrischen Schutzmantel 12, das an seiner einen Stirnseite, hier der linken Stirnseite, mit einer Stirnplatte 13 aus mikrowellendurchlässigem Material, z.B. Kunststoff oder SiO₂-Keramik, zwecks Abdichtung und Wärmedämmung verbunden, insbesondere direkt verschlossen ist. Der Mikrowellengenerator 3 ist so angeordnet, vorzugsweise auf der Außenseite der Stirnplatte 13, daß er die Mikrowellen 14 in das Gehäuse 2 im wesentlichen koaxial einspeist. Die Zuführungsleitung 4 ist eine das Gehäuse 2 in der Stirnplatte 13 benachbarten Bereich umgebende Ringleitung 15, die an eine Versorgungsleitung 16 angeschlossen ist, die durch das Umschaltventil 11 wahlweise mit einer Versorgungsleitung 16a für schadstofffreie Luft und/oder einer Versorgungsleitung 16b für thermisch-katalytisch nachzuverbrennendes Abgas verbindbar ist. Bei dem Umschaltventil 11 kann es sich um ein sog. Proportionalventil handeln, d.h. das Ventil kann auch geregelte Zwischenstellungen einnehmen, so daß schadstofffreie Luft, Abgas oder auch ein Gemisch zuführbar ist. Beim vorliegenden Ausführungsbeispiel wird z.B. kohlenwasserstoffhaltige Abluft zugeführt.

Im Schutzmantel 12 befindet sich ein vorzugsweise hohlzylindrischer Innenmantel 17, der wie die Stirnplatte 13 aus mikrowellendurchlässigem Material bestehen kann und zwecks Abdichtung und Wärmedämmung vorgesehen ist. Der Innenmantel 17 ist in einem axialen Abstand a vom linken Stirnende des Schutzmantels bzw. von der Stirnplatte 13 bzw. von der zugehörigen Schichtgrenze angeordnet, wobei diese Stirnfläche 18 des Innenmantels 17 hohlkegelförmig geformt ist. An seinem anderen, nämlich dem vorderen Ende liegt der Schutzmantel 12 an einem Innenflansch 19 des Schutzmantels 12 an. Zur Verbindung der Ringleitung 15 mit dem Innenraum des Gehäuses 2 sind auf dem Umfang verteilt angeordnete radiale Schlitze oder Löcher 21 vorgesehen. Im Gehäuse 2 verläuft somit die Gasströmung 22 von der Ringleitung 15 zunächst radial einwärts und dann bogenförmig in eine nach rechts verlaufende koaxiale Richtung übergehend, wobei die Gasströmung 22 zunächst eine erste Gehäusekammer 23, die den linken Innenbereich des Reaktorgehäuses 2 einnimmt und innerhalb der Ringleitung 15 angeordnet ist, und dann eine sich an die erste anschließende zweite Gehäusekammer 24 durchströmt, die koaxial zueinander angeordnet sind, wobei die zweite Gehäusekammer 24 vom Innenmantel 17 umgeben ist und die vorzugsweise innenkegelförmige Stirnfläche 18 des Innenmantels 17 einen strömungsgünstigen Übergang zwischen den Kammern 23, 24 schafft.

Die erste Gehäusekammer 23 ist mit einem mikrowellendurchlässigen und gasdurchlässigen, insbesondere porösen Material gefüllt, das einem primären Körper bildet. Hierbei kann es sich um einen entsprechend vorgeformten Einsatzkörper oder auch um lose eingestecktes Material handeln. Die zweite Gehäusekammer 24 ist mit einem Material von mikrowellenabsorbierender Eigenschaft gefüllt. Hierbei handelt es sich um einen gasdurchlässigen, insbesondere porösen sekundären Körper 26 aus Fasern, Faserkompositmaterial oder vorzugsweise poröser Keramik, z.B. Schaumkeramik. Hierbei kann es sich auch um ein mechanisch porosiertes Material handeln, z.B. Schaumkeramik. Wie bereits bei dem primären Material oder Körper 25 kann es sich auch bei dem sekundären Material oder Körper 26 um einen entsprechend vorgefertigten Körper oder um ein lose eingefügtes Material handeln.

Zusätzlich kann ein katalytisch wirksames Material 26a insbesondere austrittsseitig in der zweiten Gehäusekammer 24 vorgesehen sein. Hierbei kann eine katalytisch aktive Beschichtung oder Dotierung des sekundären Materials in stofflich geeigneten Anwendungsfällen vorgesehen werden, z.B. durch ein Platin-, Palladium- oder andere Edel- und Halbedelmetallpartikel bzw. Halbedelmetalloxidpartikel in feindispergierter Form enthaltendes Coating auf der Basis von Aluminiumoxid.

Darüber hinaus kann ebenfalls austrittsseitig dem Material 26a eine oder mehrere katalytisch wirksame gesonderte Schicht oder Schichten, z.B. ein oder mehrere poröse Aluminiumsilikat-Schaumkörper 26b mit zusätzlicher gegebenenfalls stofflich oder von der Aktivität her differenzierter katalytischer Beschichtung oder Beladung, wie oben angeführt, nachgeschaltet werden.

Die stoffabhängig gegebenenfalls vorhandene Mikrowellenanregbarkeit der katalytisch wirksamen Schicht kann zur weiteren Absenkung des Energiebedarfs des Umwandlungsprozesses genutzt werden.

Es ist ein oder vorzugsweise zwei Temperatursensoren 6, 7 zur Ermittlung der Temperatur in der beim vorliegenden Ausführungsbeispiel durch die zweite Gehäusekammer 24 gebildeten Reaktorkammer 28 vorgesehen. Der erste Temperatursensor 6 befindet sich im Anfangsbereich der Gehäusekammer 24 vorzugsweise zwischen den beiden Körpern 25, 26, während der zweite Temperatursensor 7 im Endbereich angeordnet ist. Bei den Temperatursensoren 6, 7 handelt es sich vorzugsweise um Meßzungen bzw. -stäbe, die das Reaktorgehäuse 2 oder zugehörige Anbauteile von außen durchsetzen und bis zur Reaktorkammer 28 reichen oder in diese hineinragen.

Der Gasdrucksensor 8 und der Stoffsensor 9 sind in Strömungsrichtung hinter der Reaktorkammer 28 in der Gas-Abführleitung 5 angeordnet, vorzugsweise in einem kleinen Abstand, wobei sie die Leitungswandung durchsetzen.

Nachfolgend wird die Funktion der Vorrichtung anhand eines mikrowellenunterstützten thermischen, insbesondere thermischkatalytischen Verbrennungsverfahrens beschrieben.

Das zu behandelnde bzw. nachzuverbrennende, z.B. kohlenstoffhaltige Abgas wird in Pfeilrichtung durch die Vorrichtung 1 geleitet. Dies kann aufgrund eines stromaufseitigen Überdruckes oder eines stromabseitigen Unterdruckes erfolgen, der betriebstechnisch vorhanden ist oder mittels eines geeigneten Gebläses erzeugt werden kann. Gleichzeitig wird der Mikrowellengenerator 3 in Betrieb gesetzt, dessen Mikrowellen 14 das Material 26 in der zweiten Gehäusekammer 24 bzw. Reaktorkammer 28 erwärmen. Aufgrund der im gasdurchlässigen, insbesondere porösen sekundären Körper 26 vorhandenen kleinen Strömungskanäle ist eine große Kontaktfläche zwischen dem Körper 26 und dem Abgas vorhanden, wodurch eine wirksame und auch gleichmäßige Aufheizung des Abgases erfolgt. Gleichzeitig erfolgt die thermische oder thermisch-katalytische Umsetzung des Abgases, dessen Gasanteile bzw. Konzentration durch den Sensor 9 überwacht bzw. ermittelt wird, der die Inhaltsstoffe, z.B. O₂, CO₂, CO, NOx, C-gesamt und dgl., zu ermitteln und entsprechende Steuerungs- bzw. Regelungssignale der vorhandenen Steuer- bzw. Regelungseinrichtung weiterzuleiten vermag. Mittels dem oder den Temperatursensoren 6, 7 kann die Temperatur in der Reaktorkammer 28 durch Steuerung oder Regelung der Leistung des Mikrowellengenerators 3, z.B. durch Ein- und Abschaltung oder Regelung eines bestimmten Temperaturverlaufs, z.B. umgekehrt proportional zur Temperatur in der Reaktorkammer, gesteuert oder geregelt werden.

In entsprechender Weise ist auch eine Steuerung oder Regelung der Durchsatzmenge des Abgases in Abhängigkeit vom Druck und/oder der Temperatur in der Abführungsleitung 5 und/oder der Temperatur in der Vorrichtung 1 möglich.

Vorzugsweise wird der Behandlungsprozeß mit schadstofffreier Luft oder in speziellen Fällen mit einer gezielten Gasbehandlung mit einem Inertgas angefahren. Steht ein entsprechendes Drucksignal am Drucksensor 8 an, wird der Mikrowellengenerator 3 zugeschaltet, wodurch der sekundäre Körper 26 und gegebenfalls auch das Material 26a erwärmt wird. Nach Erreichen einer bestimmten Temperatur, vorzugsweise der Umsetzungstemperatur des anstehenden Gases, signalisiert durch den Temperatursensor 7, wird gegenläufig die Zufuhr der schadstofffreien Luft bzw. Inertgases vermindert, gegebenenfalls bis auf Null, und die Zufuhr des Abgases vergrößert.

Auch das Signal des Sensors 9 kann dazu dienen, die Leistung des Mikrowellengenerators 3 und/oder den Gasdurchsatz und/oder den Gasanteil (schadstofffreie Luft/Abgas bzw. Inertgas/Gas) zu steuern bzw. zu regeln.

Beim vorbeschriebenen Ausführungsbeispiel wird durch den primären Körper oder die primäre Materialschicht 25a zum einen eine Durchmischung des Abgases bzw. Gasgemisches und zum anderen eine Rückzündung verhindert (Ex-Schutz), was insbesondere für explosive Gase von Bedeutung ist.

Es ist in abgewandelter Ausgestaltung möglich, die Mikrowellenabsorptionseigenschaft des Materials über seine Länge gezielt zu variieren, z.B. zu vergrößern oder zu verkleinern, wodurch die Temperatur veränderlich ist.

Es ist außerdem möglich die Porosität des Mikrowellenabsorptionsmaterials innerhalb der Schicht zu variieren, wodurch unterschiedliche Durchströmungsgeschwindigkeiten erreicht werden.

Es ist außerdem möglich zwei oder mehrere Schichten von Mikrowellenabsorptionsmaterial in der zweiten Gehäusekammer 24 bzw. Reaktorkammer 28 vorzusehen, mit einer Variation des Absorbergehalts und/oder der Porosität über die Schichten.

Für ein thermisch-katalytisches Verbrennungsverfahren ist der Vorrichtung 1 in der Reaktorkammer 28 ein Katalysator in Form eines geeigneten vorbeschriebenen Materials zugeordnet. Bei diesem Katalysator-Material kann es sich ebenfalls um eine gasdurchlässige, insbesondere Materialschicht oder Körper in der zweiten Kammer 24 handeln. Bei einem solchen Ein- oder auch mehrschichtigen Katalysator-Material kann es sich im weiteren z.B. um Metallsalze, Mischkatalysator-Material oder dergleichen handeln.

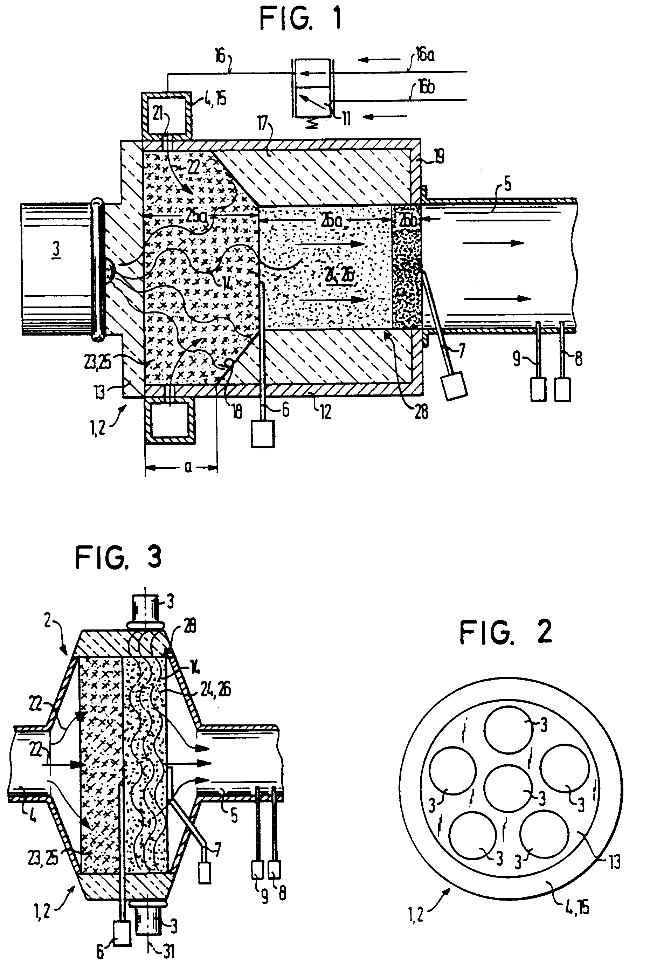

Im Rahmen der Erfindung ist es möglich, den Mikrowellengenerator 3 kontinuierlich oder gepulst zu betreiben. Letzteres ist vor allem bei Reaktoren größerer Leistung mit mehreren Mikrowellengeneratoren zur Erzielung einer gleichmäßigen Temperaturverteilung von Vorteil. Im Gegensatz zur Ausgestaltung gemäß Fig. 1, bei der nur ein Mikrowellengenerator 3, insbesondere für kleine Leistungen, vorgesehen ist, können mehrere, nebeneinander angeordnete Mikrowellengeneratoren vorgesehen sein, z.B. auf der Stirnseite der Vorrichtung 1 verteilt, wie es die Ausgestaltung gemäß Fig. 2 zeigt, bei der ein zentraler Mikrowellengenerator 3 und mehrere auf einem Umkreis verteilt angeordnete Mikrowellengeneratoren 3 vorgesehen sind.

Mit dem Temperatursensor 6 wird die Reaktionszone bezüglich der vorhandenen Temperatur nach der kalten Zone hin überwacht. Das Signal dieses Sensors 6 läßt sich für eine Sicherheitsschaltung verwerten und/oder auch für folgende Vorgänge: Abgas zu; Frischluft auf; Mikrowelle aus.

Der Vorrichtung 1 bzw. der Reaktorkammer 28 kann z.B. in der Abführungsleitung 5 wenigstens ein Wärmetauscher nachgeschaltet sein, um die Temperatur und rückgewinnbare Restenthalphie in behandelten bzw. gereinigten Abgas zu nutzen, vorzugsweise zur Vorwärmung des der Vorrichtung 1 zuzuführenden Abgases oder auch für andere Fremdnutzungszwecke.

Es ist im Rahmen der Erfindung auch möglich, das Abgas durch die Vorrichtung 1 koaxial hindurchzuführen und ein oder mehrere Mikrowellengeneratoren 3 mit etwa senkrecht zum Gasstrom gerichteter Wirkrichtung am Umfang der Vorrichtung 1 anzuordnen. Eine solche Ausgestaltung ist in Fig. 3 dargestellt. Bei dieser Ausgestaltung umschließt das wie bereits beim ersten Ausführungsbeispiel runde Reaktorgehäuse 2 gegebenenfalls aus mikrowellendurchlässigem Material einen Innenraum von vorzugsweise doppel-trapezförmiger Form, wie es Fig. 3 zeigt. Das Reaktorgehäuse 2 ist auf der einen Seite mit einer Zuführungsleitung 4 und auf der anderen Seite mit einer Abführungsleitung 5 verbunden, die koaxial angeordnet und in ihrer Querschnittsgröße wesentlich kleiner bemessen sind als die Querschnittsgröße des Reaktorgehäuses 2. Aufgrund der Doppel-Trapezform ist trotzdem eine strömungsgünstige Leitung des Gases in den sich konzentrisch erweiternden Innenraum des Reaktorgehäuses 2 möglich. Auch bei diesem Ausführungsbeispiel sind der primäre Körper 25 und der sekundäre Körper 26 in Strömungsrichtung hintereinanderliegend vorhanden, und es sind auch die Sensoren entsprechend dem vorbeschriebenen Ausführungsbeispiel angeordnet, wobei auch hier der erste Temperatursensor 6 zwischen den Schichten vorgesehen sein kann. Im Gegensatz zum vorbeschriebenen Ausführungsbeispiel sind hier jedoch mehrere Mikrowellengeneratoren 3 auf dem Umfang des Reaktorgehäuses 2 verteilt angeordnet und zwar in einer die Reaktorkammer 28 umgebenden Mittelebene 31, wobei sie ihre Mikrowellen 14 vorzugsweise radial einwärts in die Reaktorkammer 28 einspeisen.

Es ist vorteilhaft, diese Mikrowellengeneratoren 3 so anzuordnen, daß eine gegenseitige Direktbestrahlung vermieden wird. Dies kann durch eine axial versetzte Anordnung in einfacher Weise erreicht werden. Eine solche Versetzung kann sowohl in Umfangsrichtung als auch in axialer Richtung erfolgen und zwar insbesondere dann, wenn die axiale Breite der Reaktorkammer 28 größer bemessen wird, als es in Fig. 3 dargestellt ist.

Im übrigen ist die Funktion und Betriebsweise der Vorrichtung 1 nach Fig. 3 der Vorrichtung nach Fig. 1 entsprechend.

## Patentansprüche

1. Verfahren zur thermischen Behandlung von Gas, insbesondere zur thermischen und/oder katalytischen Nachverbrennung von Abgas in einer Vorrichtung, wobei das Gas durch einen gasdurchlässigen Körper geführt wird, der wenigstens teilweise aus mikrowellenabsorbierendem Material besteht, und bei dem der Körper durch Bestrahlung mit Mikrowellen erhitzt wird und das Gas beim Durchströmen des Körpers durch Kontakt mit diesem erhitzt wird,
**dadurch gekennzeichnet,**
daß das Gas zuerst durch ein gasdurchlässiges mikrowellendurchlässiges Material eines primären Körpers (25) geleitet wird und dann durch den gasdurchlässigen, somit sekundären Körper (26) aus mikrowellenabsorbierendem Material geführt wird.

2. Verfahren nach Anspruch 1,
**dadurch gekennzeichnet,**
daß die Temperatur in einer Reaktionszone (Reaktorkammer 28) der Vorrichtung (1) ermittelt wird und die Leistung eines Mikrowellengenerators (3) und/oder die Menge des Gasdurchsatzes in Abhängigkeit von der Temperatur vergrößert oder verkleinert wird.

3. Verfahren nach Anspruch 1 oder 2,
**dadurch gekennzeichnet,**
daß der Gasdruck im Bereich der Vorrichtung (1) oder stromab der Vorrichtung (1) ermittelt wird und die Leistung des Mikrowellengenerators (3) und/oder der Gasdurchsatz und/oder die Temperatur in Abhängigkeit vom Gasdruck vergrößert oder vermindert wird.

4. Verfahren nach einem der Ansprüche 1 bis 3,
**dadurch gekennzeichnet,**
daß das Gas vor einer Reaktionszone (Reaktorkammer 28) durch den primären Körper (25) aus porösem mikrowellendurchlässigem Material geleitet wird.

5. Verfahren nach einem der Ansprüche 1 bis 4,
**dadurch gekennzeichnet,**
daß die Behandlung des Gases mit der Durchleitung schadstofffreier Luft oder inertem Gas begonnen wird und nach dein Aufbau eines bestimmten Druckes in, vor oder nach der Vorrichtung (1), die Zufuhr der schadstofffreien Luft oder des inerten Gases vermindert und die Zufuhr des zu behandelnden Gases vergrößert wird.

6. Verfahren nach Anspruch 5,
**dadurch gekennzeichnet,**
daß nach dem Aufbau des bestimmten Druckes der Mikrowellengenerator (3) eingeschaltet wird.

7. Vorrichtung zur Durchführung des Verfahrens nach einem der Ansprüche 1 bis 6, mit
- einem Gehäuse (2),
- einer Reaktionszone (Reaktorkammer 28) im Gehäuse (2),
- einer Gas-Einlaßöffnung (21) und einer Gas-Auslaßöffnung (5) im Gehäuse (2), wobei der Gas-Strömungsweg sich durch die Reaktionszone erstreckt,
- einem Körper (26), wenigstens teilweise aus gasdurchlässigem, faserförmigem oder porösem und mikrowellenabsorbierendem Material in der Reaktionszone,
- und einem Mikrowellengenerator (3) zur Erhitzung des mikrowellenabsorbierenden Materials mittels Mikrowellen (14),
**dadurch gekennzeichnet,**
daß im sich in Gehäuse (2) erstreckenden Gas-Strömungsweg in Strömungsrichtung zuerst ein primärer Körper (25) aus gasdurchlässigem mikrowellendurchlässigem Material angeordnet ist, dem der somit sekundäre Körper (26) aus mikrowellenabsorbierendem Material nachgeordnet ist.

8. Vorrichtung nach Anspruch 7,
**dadurch gekennzeichnet,**
daß der primäre Körper (25) aus faserförmigem oder porösem Material besteht.

9. Vorrichtung nach Anspruch 7 oder 8,
**dadurch gekennzeichnet,**
daß das Material des sekundären Körpers (26) aus Keramik, Schaumkeramik, Fasern oder Faserkompositmaterial besteht.

10. Vorrichtung nach einem der Ansprüche 7 bis 9,
**dadurch gekennzeichnet,**
daß im Bereich der Reaktionszone (Reaktionskammer 28) wenigstens ein Temperatursensor (6, 7) zur Ermittlung der Gas- und/oder Reaktortemperatur vorgesehen ist.

11. Vorrichtung nach einem der Ansprüche 7 bis 10
**dadurch gekennzeichnet,**
daß im Bereich des Strömungsweges der Vorrichtung ein Drucksensor (8) zur Ermittlung des Gasdrucks vorgesehen ist.

12. Vorrichtung nach Anspruch 11,
**dadurch gekennzeichnet,**
daß der Drucksensor (8) in einer der Reaktionszone (28) in Strömungsrichtung nachgeordneten Gas-Abführungsleitung (5) angeordnet ist.

13. Vorrichtung nach einem der Ansprüche 7 bis 12,
**dadurch gekennzeichnet,**
daß eine Steuer- oder Regeleinrichtung zum Variieren der Leistung des Mikrowellengenerators (3) und/oder der Gasdurchsatzmenge in Abhängigkeit von der Gas- und/oder Reaktortemperatur, der Konzentration des Gases und/oder dem Gasdruck vorgesehen ist.

14. Vorrichtung nach einem der Ansprüche 7 bis 13,
**dadurch gekennzeichnet,**
daß in der Reaktionszone (Reaktionskammer 28) zwei oder mehrere Materialschichten unterschiedlicher Porosität und/oder Mikrowellenabsorptionskapazität vorgesehen sind.

15. Vorrichtung nach einem der Ansprüche 7 bis 14,
**dadurch gekennzeichnet,**
daß in der Reaktionszone (Reaktionskammer 28) oder in Strömungsrichtung nach der Reaktionszone ein katalytisch wirksames Material (26b) angeordnet ist.

16. Vorrichtung nach einem der Ansprüche 7 bis 15,
**dadurch gekennzeichnet,**
daß in einer mit der Gas-Einlaßöffnung (21) verbundenen Gas-Versorgungsleitung (16) ein Umschalt- oder Steuerventil (11) angeordnet ist, mit dem wahlweise eine Versorgungsleitung (16a) für schadstofffreie Luft oder inertes Gas und eine Versorgungsleitung (16b) für das zu behandelnde Gas mit der Zuführungsleitung (4) verbindbar ist.

17. Vorrichtung nach einem der Ansprüche 7 bis 16,
**dadurch gekennzeichnet,**
daß ein oder mehrere Mikrowellengeneratoren (3) an einer Seite des Gehäuses (2) angeordnet sind und der Gas-Strömungsweg sich im dem Mikrowellengenerator (3) zugewandten Endbereich des Gehäuses (2) radial einwärts erstreckt und dann bogenförmig zur dein oder den Mikrowellengeneratoren (3) abgewandten Seite des Gehäuses (2) insbesondere koaxial erstreckt.

18. Vorrichtung nach einem der Ansprüche 7 bis 16,
**dadurch gekennzeichnet,**
daß der Strömungsweg des zu behandelnden Gases sich koaxial durch das Gehäuse (2) erstreckt und ein oder mehrere Mikrowellengeneratoren (3) auf dem Umfang des Gehäuses (2) verteilt angeordnet sind.

## Claims

1. Process for thermal treatment of gas, in particular for thermal and/or catalytic after-burning of waste gas in a device, whereby the gas is conducted through a gas-permeable body which consists at least partly of material which absorbs microwaves, and in which the body is heated by irradiation with microwaves and the gas is heated when flowing through the body, by contact with this body,
characterised in that,
the gas is first directed through a gas-permeable, microwave-permeable material of a primary body (25) and then taken through the gas-permeable, thus secondary body (26) of material which absorbs microwaves.

2. Process according to claim 1,
characterised in that,
the temperature in a reaction zone (reactor chamber 28) of the device (1) is detected and the output of a microwave generator (3) and/or the quantity of the gas throughput is increased or reduced in dependence on the temperature.

3. Process according to claim 1 or 2,
characterised in that,
the gas pressure in the region of or downstream of the device (1) is detected and the output of the microwave generator (3) and/or the gas throughput and/or the temperature is increased or decreased in dependence upon the gas pressure.

4. Process according to any of claims 1 to 3,
characterised in that,
before a reaction zone (reactor chamber 28), the gas is led through the primary body (25) of porous, microwave-permeable material.

5. Process according to any of claims 1 to 4,
characterised in that,
the treatment of the gas is started with the passage of air free of pollutant substances or the passage of inert gas, and after the build-up of a certain pressure in, before or after the device (1), the supply of the air free of pollutant substances or the supply of the inert gas is decreased and the supply of the gas to be treated is increased

6. Process according to claim 5,
characterised in that,
after the certain pressure has been built up, the microwave generator (3) is switched on.

7. Device for carrying out the process according to any of claims 1 to 6, having
- a housing (2)
- a reaction zone (reactor chamber 28) in the housing (2),
- a gas inlet opening (21) and gas outlet opening (5) in the housing (2), wherein the gas flow path extends through the reaction zone,
- a body (26), in the reaction zone, at least partly of a gas-permeable, fibrous or porous material which absorbs microwaves,
- and a microwave generator (3) for heating the microwave-absorbent material by means of microwaves (14),
characterised in that,
in the gas flow path extending in the housing (2) there is arranged, in the direction of flow, first a primary body (25) of gas-permeable, microwave-permeable material, after which there is arranged the thus secondary body (26) of microwave-absorbent material.

8. Device according to claim 7,
characterised in that,
the primary body (25) is of fibrous or porous material.

9. Device according to claim 7 or 8,
characterised in that,
the material of the secondary body (26) is of ceramics, foamed ceramics, fibres, or composite fibre material.

10. Device according to any of claims 7 to 9,
characterised in that,
in the region of the reaction zone (reaction chamber 28) at least one temperature sensor (6, 7) is provided for detecting the gas temperature and/or reactor temperature.

11. Device according to any of claims 7 to 10,
characterised in that,
a pressure sensor (8) is provided in the region of the flow path of the device, for detecting the gas pressure.

12. Device according to claim 11,
characterised in that,
the pressure sensor (8) is arranged in a gas discharge line (5) arranged after the reactor zone (28) in the direction of flow.

13. Device according to any of claims 7 to 12,
characterised in that,
a control or regulating device is provided for varying the output of microwave generator (3) and/or the gas throughput quantity in dependence on the gas temperature and/or reactor temperature, the concentration of the gas and/or the gas pressure.

14. Device according to any of claims 7 to 13,
characterised in that,
provided in the reaction zone (reaction chamber 28) there are two or several material layers of differing porosities and/or capacities for absorbing microwaves.

15. Device according to any of claims 7 to 14,
characterised in that,
in, or - in the direction of flow - after, the reaction zone (reaction chamber 28) there is arranged a catalytically acting material (26b).

16. Device according to any of claims 7 to 15,
characterised in that,
a change-over or control valve (11) is provided in a gas supply line (16) connected with the gas inlet opening (21), with which valve a supply line (16a) for air free of pollutant substances or for inert gas and a supply line (16b) for the gas to be treated can be selectively connected with the feed line (4).

17. Device according to any of claims 7 to 16,
characterised in that,
one or several microwave generators (3) are arranged on one side of the housing (2) and the gas flow path extends radially inwardly in the end region of the housing (2) towards the microwave generator (3) and then extends, in particular coaxially, in the form of an arc to the side of the housing (2) away from the microwave generator (3).

18. Device according to any of claims 7 to 16,
characterised in that,
the flow path of the gas to be treated extends coaxially through the housing (2) and one or several microwave generators (3) are arranged distributed over the periphery of the housing (2).

## Revendications

1. Procédé de traitement thermique de gaz, notamment de post-combustion thermique et/ou catalytique de gaz brûlés dans un dispositif, le gaz traversant un corps perméable au gaz qui est au moins partiellement constitué d'un matériau absorbant les micro-ondes, dans lequel le corps est chauffé par irradiation avec des micro-ondes et le gaz est réchauffé par contact avec le corps lors de son passage dans ledit corps, caractérisé en ce que l'on fait circuler le gaz tout d'abord à travers un matériau perméable au gaz et perméable aux micro-ondes d'un corps (25) primaire, puis à travers le corps (26), secondaire, en un matériau perméable au gaz absorbant les micro-ondes.

2. Procédé selon la revendication 1, caractérisé en ce que l'on mesure la température dans la zone de réaction (chambre de réacteur 28) du dispositif (1) et on augmente ou on diminue la puissance d'un générateur (3) de micro-ondes et/ou le débit de gaz en fonction de la température.

3. Procédé selon la revendication 1 ou 2, caractérisé en ce que l'on mesure la pression du gaz dans la région du dispositif (1) ou en aval du dispositif (1) et on augmente ou on diminue la puissance du générateur (3) de micro-ondes et/ou le débit de gaz et/ou la température en fonction de la pression du gaz.

4. Procédé selon l'une des revendications 1 à 3, caractérisé en ce que l'on fait circuler le gaz à travers le corps (25) primaire en matériau poreux perméable aux micro-ondes, en amont d'une zone de réaction (chambre de réacteur 28).

5. Procédé selon l'une des revendications 1 à 4, caractérisé en ce que l'on commence le traitement du gaz par l'injection d'air débarrassé des substances polluantes ou de gaz inerte et, après obtention d'une pression déterminée dans, en amont ou en aval du dispositif (1), on diminue l'apport d'air débarrassé de substances polluantes ou de gaz inerte et on augmente la quantité introduite de gaz à traiter.

6. Procédé selon la revendication 5, caractérisé par le fait qu'après obtention de la pression déterminée on met le générateur (3) de micro-ondes en service.

7. Dispositif pour la mise en oeuvre du procédé selon l'une des revendications 1 à 6, avec
- une enveloppe (2)
- une zone de réaction (chambre de réacteur 28) dans l'enveloppe (2)
- une ouverture (21) d'entrée de gaz et une ouverture (5) de sortie de gaz dans l'enveloppe (2), le trajet d'écoulement du gaz s'étendant à travers la chambre de réaction,
- un corps (26) au moins partiellement formé d'un matériau perméable au gaz, fibreux ou poreux, absorbant les micro-ondes, placé dans la zone de réaction,
- et un générateur (3) de micro-ondes pour chauffer au moyen de micro-ondes (14) le matériau absorbant les micro-ondes,
caractérisé par le fait qu'un corps (25) primaire en un matériau perméable au gaz et perméable aux micro-ondes est placé sur le trajet d'écoulement des gaz à l'intérieur de l'enveloppe (2), en premier dans la direction d'écoulement des gaz, et qu'un corps (26), secondaire, en un matériau absorbant les micro-ondes est placé à la suit de celui-ci.

8. Dispositif selon la revendication 7, caractérisé en ce que le corps (25) primaire est réalisé en un matériau fibreux ou poreux.

9. Dispositif selon la revendication 7 ou 8, caractérisé en ce que le corps (26) secondaire est réalisé en céramique, en céramique expansée, en fibres ou en un matériau composite à base de fibres.

10. Dispositif selon l'une des revendications 7 à 9, caractérisé par le fait qu'au moins un capteur de température (6, 7) pour mesurer la température du gaz et/ou la température du réacteur est prévu dans la zone de réaction (chambre de réacteur 28).

11. Dispositif selon l'une des revendications 7 à 10, caractérisé par le fait qu'un capteur de pression (8) pour mesurer la pression du gaz est prévu dans la région du trajet d'écoulement du dispositif.

12. Dispositif selon la revendication 11, caractérisé en ce que le capteur de pression (8) est disposé dans un conduit (5) d'évacuation de gaz situé en aval, dans la direction d'écoulement, de la zone de réaction (28).

13. Dispositif selon l'une des revendications 7 à 12, caractérisé par le fait qu'il est prévu un dispositif de commande et de réglage pour faire varier la puissance du générateur (3) de micro-ondes et/ou le débit de gaz en fonction de la température du gaz et/ou de la température du réacteur, de la concentration du gaz et/ou de la pression du gaz.

14. Dispositif selon l'une des revendications 7 à 13, caractérisé par le fait qu'il est prévu dans la zone de réaction (chambre de réacteur 28) deux ou plusieurs couches de matériau présentant des porosités différentes et/ou une capacité différente d'absorption des micro-ondes.

15. Dispositif selon l'une des revendications 7 à 14, caractérisé par le fait qu'un matériau (26b) à activité catalytique est disposé dans la zone de réaction (chambre de réacteur 28) ou en aval de la zone de réaction, dans la direction d'écoulement.

16. Dispositif selon l'une des revendications 7 à 15, caractérisé par le fait qu'une vanne (11) de commutation ou de commande, à l'aide de laquelle une conduite (16a) d'alimentation en air débarrassé de substances polluantes ou en gaz inerte et une conduite (16b) d'alimentation en gaz à traiter peuvent être connectées de manière sélective à la conduite d'entrée (4), est disposée dans une conduite (16) d'alimentation en gaz communiquant avec l'ouverture (21) d'entree de gaz.

17. Dispositif selon l'une des revendications 7 à 16, caractérisé par le fait qu'un ou plusieurs générateur(s) (3) de micro-ondes est(sont) disposés sur un côté de l'enveloppe (2) et que le trajet d'écoulement du gaz, dans la région d'extrémité de l'enveloppe (2) tournée vers le générateur (3) de micro-ondes, s'étend radialement vers l'intérieur puis s'étend en arc de cercle, notamment coaxialement, en direction du côté de l'enveloppe (2) éloigné du ou des générateur(s) (3) de micro-ondes.

18. Dispositif selon l'une des revendications 7 à 16, caractérisé en ce que le trajet d'écoulement du gaz à traiter s'étend de manière coaxiale à travers l'enveloppe (2) et qu'un ou plusieurs générateur(s) (3) de micro-ondes est(sont) disposés sur le pourtour de l'enveloppe (2).
